Europäisches Patentamt

European Patent Office

Office européen des brevets

(11) Publication number: **0 089 144**
**B1**

# (12) EUROPEAN PATENT SPECIFICATION

(45) Date of publication of patent specification: **07.05.86**

(21) Application number: **83301119.0**

(22) Date of filing: **02.03.83**

(51) Int. Cl.⁴: **B 65 G 15/62**

(54) **Troughed belt conveyor.**

(30) Priority: **12.03.82 GB 8207275**

(43) Date of publication of application:
**21.09.83 Bulletin 83/38**

(45) Publication of the grant of the patent:
**07.05.86 Bulletin 86/19**

(84) Designated Contracting States:
**AT BE DE FR GB IT NL SE**

(56) References cited:
**EP-A-0 046 425**
**DE-A-3 008 676**
**DE-C-1 126 796**
**GB-A- 876 268**
**GB-A-1 236 866**
**US-A-2 249 588**
**US-A-4 215 776**

**FÖRDERN UND HEBEN, vol. 22, no. 14, 1972,
Mainz, J. HENNING "Gleitbahnen aus
Kunststoff", pages 785-786**

(73) Proprietor: **Menorvale Limited
P.O. Box 3
Dudley West Midlands, DY3 3YY (GB)**

(72) Inventor: **Sheldon, Arthur Raymond
172 Cotwall End Road Sedgley
Dudley West Midlands, DY3 3YG (GB)**

(74) Representative: **Healy, Cecilia Patricia
134 Grayswood Avenue
Coventry, CV5 8HQ (GB)**

Courier Press, Leamington Spa, England.

## Description

This invention relates to troughed belt conveyors. Troughed belt conveyors may be used for many types of product but are primarily intended for conveying materials such as coal, stone or similar particulate materials, which need to be confined laterally on the conveyor to prevent loss. Such troughed belt conveyors have a belt which is allowed to adopt a trough-like cross-section to confine the product (EP—A—46425).

The belt has previously been supported by sets of troughing idler rollers spaced along the length of the belt, each such set usually comprising three rollers, one mounted for free rotation about a horizontal axis and the other two being rotatable about axes inclining upwardly and oppositely at opposed ends of said one roller to define a trough shape to which the belt conforms. In some cases, five rollers per set are used, with the outermost two rollers being angled upwardly relative to their neighbours.

Each set of three to five rollers has been individually supported on brackets from a structural framework. Where necessary, there has been partial shielding of the product by the use of side skirts, or complete enclosures have been provided, for example for hazardous products or in outdoor conditions.

These prior troughed belt conveyors have been relatively expensive and complicated to construct. Even in their basic form, without side skirts or enclosures, they have required large numbers of rollers and bearings, involving high capital costs. Maintenance costs have also been high, principally for the replacement of worn or damaged bearings or rollers. A roller caused to jam by a seized bearing rapidly becomes worn and can eventually damage the belt, causing complete shutdown for repair. Where side skirts or enclosures are used, the maintenance of troughing idler rollers is even more difficult, involving problems of access.

Proposals have been made for transporting such materials as ready mixed cement concrete and damp crystaline potash by the use of conveyors having glides to support a troughed belt, rather than a plurality of transverse rollers.

For example European patent application number 0,046,425 Thenaud describes an open topped troughed belt conveyor used to deliver ready mixed cement concrete. Ready mixed concrete is a viscous liquid and tends to exert a hydrostatic pressure on the supporting belt. This contrasts with the possible uneven heavy loading on a belt supporting materials such as coal or stone. Further, any bumping of the ready mixed cement concrete does not cause it to break up or to shed large amounts of dust because it is naturally cohesive.

European application number 0,046,425 describes a conveyor having a shallow troughed belt having 85% of its length only supported by glides of aluminium, possibly faced with plastics. At least 15% of the feed run of the belt is unsupported by the glides because they have gaps between them. If such a belt were used to carry heavy lumps of rock or the like, they would bump as they passed over the discontinuous glides.

Similarly, European application number 0,046,425 describes localised belt supports in contact with between 25% and 45% of the belt width. The hydrostatic pressure exerted by ready mixed concrete automatically spreads the loading of the product across this belt. Such large gaps between the glides would be unsatisfactory for lumpy material such as rock or stone since unsupported portions of the belt could be pushed into the large gaps between the glides, resulting in belt and glide damage and also narrowing the effective width and depth of the troughed belt, which reduces the load carrying capacity.

Finally, European application number 0,046,425 describes an uncovered belt conveyor open to the atmosphere which would give rise to environmental dust hazards in the transport of dry stone and similar materials.

A further proposal is made in the publication Fördern und Heben volume 22 (1972) pages 785 to 786 which describes an experimental conveyor used for transporting filtered and ground potash having a water content of between 11% and 12%. The conveyor has a shallow troughed belt supported by plastics plates having the same profile as the previously used roller stands. The plates are continuous and they overlap so that the entire underside of the belt is supported. The conveyor is not enclosed. Again, this arrangement would not be entirely satisfactory for handling coal or rock because of the environmental dust pollution. Further, because there are no gaps in the guide beneath the belt, any dust working its way underneath the belt would remain there indefinitely, tending to scour the belt and the low friction supporting guides.

In the field of handling finely divided particulate material such as grain, it has been proposed in British patent specification number 876,268 to use a wholly enclosed tube through which a belt is pulled to provide motive power to a bulk of grain or similar material within the tube. Grain is conventionally handled using air pressure or vacuum tubes or by chain type conveyors which act within tubes to pull the bulk of the material along by paddles or similar flights on the chain.

British patent specification number 876,268 is effectively a simple form of the conventional chain type grain conveyor in which the chain and flights are replaced by a belt running through the conveyor which merely imparts motion to the grain and does not enclose or support the grain.

It is an object of the present invention to provide a troughed belt conveyor primarily for conveying lumpy materials such as rock, coal or ore which overcomes or reduces the disadvantages of conventional conveyors for such products.

According to the invention there is provided a troughed belt conveyor primarily for lumpy materials such as rock, coal or ore comprising an endless conveyor belt having feed and return runs, power drive means and support means for the feed run of the belt including a plurality of elongate low-friction abrasion-resistant glides extending in the direction of the belt and support means for the return run of the belt, the feed run being supported and enclosed by a rigid structural metal tube; the glides being provided at closely spaced positions within the tube and define between them a substantially continuous part circular arcuate bearing surface to which the belt conforms closely in use, whereby the load carried on the belt is maximised while localised loading on the bearing surface is avoided.

The expression "arcuate" as used herein is not limited to a truly arcuate profile but includes a profile made up of discrete angled surfaces closely approximating to an arc and such surfaces may be touching or separate provided that a belt supported thereon may conform closely to the surfaces while itself having a substantially arcuate profile. In the context of a fairly flexible belt, the width of any gaps between adjacent surfaces of the guide means will therefore be small compared with the width of the surfaces themselves.

The tube may have dust control means such as air filters at suitable positions, for example at the discharge end of the conveyor.

Access openings and/or inspection windows may be provided in the tube.

Means may be provided for supporting the return run of the endless belt, for example a support plate or idler rollers mounted under the tube.

A preferred material for the low-friction, abrasion-resistant material is an ultra-high molecular weight, high density polyethylene, for example that sold under the Registered Trade Mark PERPLAS.

A troughed belt conveyor embodying the invention will now be described in more detail by way of example only, with reference to the accompanying drawings, in which:—

Figure 1 is a transverse section through a conveyor which embodies the invention,

Figure 2 is a small scale side elevational view of part of the conveyor shown in Figure 1 at its discharge end.

A troughed belt conveyor is generally indicated at 10 and comprises a cylindrical steel or other rigid tube 11 which is typically of 600 mm. diameter or more. The material of the tube will be selected for the particular product to be carried, with steel being preferred for such heavy products as stone and coal. The tube 11 will provide the main structural support of the conveyor and must be rigid enough to withstand the imposed loads due both to the product and to environmental factors such as wind and snow.

The tube 11 is mounted on suitable support brackets such as those shown at 12. Where a single section of tube 11 will not have sufficient length, a number of such sections will be joined together as shown at 13.

The product is carried on an endless belt which again will be of material suitable for the type of product to be conveyed. For many products a fabric-reinforced rubber composition will be used. The feed or top run of the belt is shown at 14a and the return or bottom run is shown at 14b.

The belt 14 is driven in generally known manner by one or more drive drums 15. The drum 15 shown is at the discharge end of the conveyor and pulls the belt 14 and the product it carries. The return or bottom run 14b is supported underneath the tube 11 on return idler rollers 16, which are shown by way of example as being curved flexible LIMBEROLLERS (Registered Trade Mark). These could be replaced by flat or angled freely rotatable rollers or by a support plate to support the belt 14b.

The feed run of the conveyor is guided on a set of parallel guide elements 17, made of a low-friction and abrasion-resistant material such as high-density polyethylene. A preferred material is an ultra-high molecular weight, high density polyethylene sold under the Registered Trade Mark PERPLAS.

The guide elements 17 are profiled to define arcs of a circle concentric with the interior surface of the tube 11. They are closely positioned, so as to provide a substantially continuous arcuate profile along which the belt is pulled. Alternatively, the strips could be flat but sufficiently closely spaced to achieve a generally arcuate profile as previously defined. It is important to ensure that the belt is allowed to adopt as nearly a true arcuate shape as possible so as to gain the best carrying capacity for the width of the belt. It is also helpful in ensuring even wear of the strips and smooth running of the belt.

As an alternative (not shown) to using a plurality of strips, the guide means for the belt could comprise a single guide strip of arcuate shape, which could even form the support for the belt, being combined with, or forming the lower part of, the tube 11 for example.

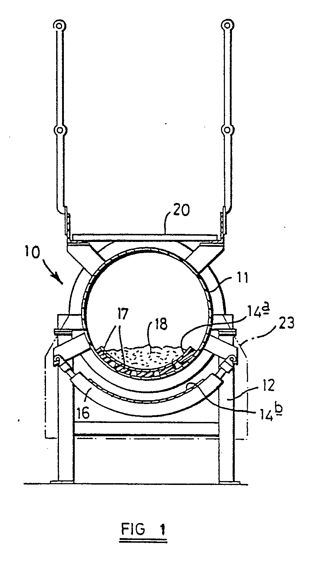

The effect of using a generally arcuate profile is seen when considering Figure 1, where the product is shown at 18 as a powder-like material. It is possible to fill the belt almost to the top with the product because it is enclosed inside the tube 11 and loss of product 18 due to air movements is eliminated almost completely.

Since the guide elements 17 extend substantially continuously along the tube, the belt 14 can run smoothly on the low-friction surface which they provide. Comparing this situation with that obtaining with conventional troughed belt conveyors, where the belt is repeatedly contacted by, or "bumped" over sets of rollers as it is drawn along, it will be seen that there is much less tendency for the product 18 to be disturbed during conveying. This may reduce risk of damage to the product and spillage from the belt, enabling the latter to be filled more fully than is presently possible without loss.

Where a product such as stone is being conveyed, the reduction in bumping and vibration due to the belt passing over rollers, may greatly reduce the dust generated. Taking this in combination with the total enclosure of the belt by the tube 11, health and environmental risks as well as wastage are lessened.

Smoother running of the belt also has the effect of reducing belt wear and hence down time for repair. In addition, the absence of moving rollers and the associated bearings reduces routine maintenance. The only maintenance required in general is for the belt 14 and guide elements 17 to be inspected periodically and renewed as required.

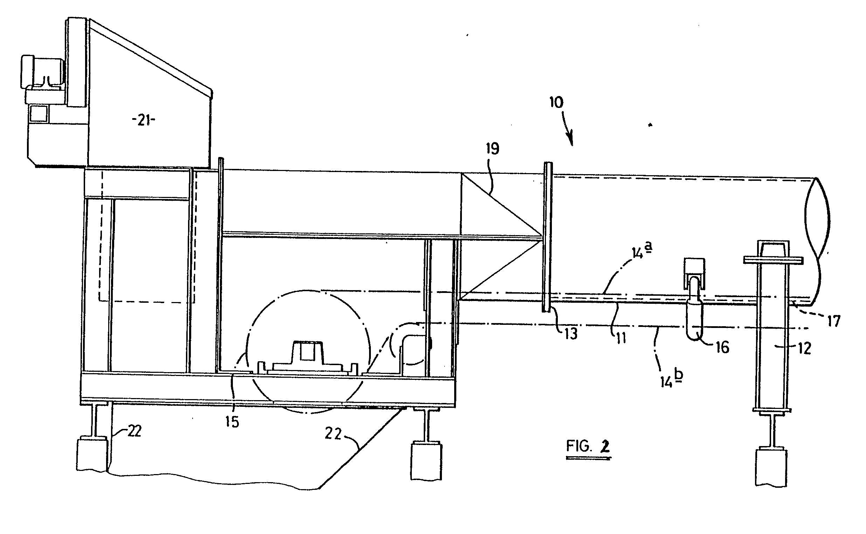

Access to the inside of the tube 11 can be gained from its ends, since it is comfortably large enough in diameter for a person to crawl through. For long conveyors 10, however, inspection windows and/or access covers such as that shown at 19 in Figure 2 may be provided. This access cover 19 is located at the discharge end of the conveyor and is used partly for access to the tube 11 itself and partly for inspection of the head drum 15. In the conveyor shown, the tube is provided with air filtration means 21 acting as a dust extractor. The extractor may also be inspected via the access cover 19. The belt discharges into a discharge hopper 22 which may lead to a further length of conveyor or to storage or treatment facilities.

To inspect the tube 11, an optional walkway 20, not shown in Figure 2, may be provided. Further optional features which may be provided include belt guards 23 for the return run 14b of the belt.

It will be seen that the conveyor 10 described has some major advantages both from the environmental and from the maintenance point of view. The substitution of low-friction, abrasion-resistant guide elements 17 for the conventional rollers enables low capital and maintenance costs to be achieved and reduces belt wear and tear, noise, vibration and dust generation in many cases. It also, together with the generally continuous arcuate profile of the guide elements 17, permits the belt 14 to achieve its maximum carrying capacity for the product 18 with reduced risk of spillage. Where the belt is supported within a tube 11 as illustrated, the product 18 is further protected.

The tubular construction has the advantage of reducing constructional work on site when the conveyor is being erected, compared to the need to build a suitable framework, install rollers, adjust these for angle, and provide skirting where necessary, in the building of a conventional conveyor. The tube sections 11 can simply be brought to the site and connected together using comparatively few supports 12, because of the rigid structural nature of the tubes 11 which form a backbone for the conveyor.

The low-friction guide elements 17 may be previously installed in the tubes 11 or may be added after assembly. In some cases it may be preferred to provide the low-friction material in the form of a continuous liner for the tube 11 rather than in strips and it might also be possible to form the tube itself of low-friction, abrasion-resistant material.

The conveyor can be horizontal or angled at a slope up to about 18° or 20° for a smooth belt. Where the belt 14 is ribbed or otherwise formed to prevent longitudinal slippage, an angle of about 30° may be achieved.

## Claims

1. A troughed belt conveyor (10) primarily for lumpy material such as rock, coal or ore comprising an endless conveyor belt (14) having feed (14a) and return runs (14b), power drive means (15), and support means for the feed run of the belt including a plurality of elongate low-friction abrasion-resistant glides (17) extending in the direction of the belt and support means (16) for the return run of the belt characterised in that the feed run (14a) is supported and enclosed by a rigid structural metal tube (11); the glides (17) are provided at closely-spaced positions within the tube and define between them a substantially continuous part-circular arcuate bearing surface to which the belt (14a) conforms closely in use, whereby the load (18) carried on the belt (14a) is maximised while localised loading on the bearing surface is avoided.

2. A troughed belt conveyor according to claim 1 further characterised in that dust control means (21) are provided at the discharge end of the conveyor (10).

3. A troughed belt conveyor according to claim 1 further characterised in that an access opening (19) is provided in the rigid structural metal tube (11).

4. A troughed belt conveyor according to claim 1 further characterised in that an inspection window is provided in the rigid structural metal tube (11).

5. A troughed belt conveyor according to any preceding claim further characterised in that the low-friction, abrasion-resistant material of the glides (17) is an ultra-high molecular weight, high density polyethylene.

6. A troughed belt conveyor according to any preceding claim further characterised in that an inspection walk way (20) is externally mounted on the rigid structural metal tube (11).

## Patentansprüche

1. Muldengurtförderer (10), insbesondere für stückiges Gut wie Gestein, Kohle oder Erz, mit einem ein Fördertrum (14a) und ein Rücklauftrum (14b) aufweisenden Endlosgurtband (14), mit einem Motorantrieb (15), und mit Haltemitteln für das Fördertrum des Gurtbands, umfassend mehrere lange abriebfeste reibungsarme Gleitelemente (17), die in Richtung des Gurtbands verlaufen, und mit einer Halterung (16) für das Rücklauftrum des Gurtbands, dadurch gekennzeichnet, daß das Fördertrum (14a) von einem formsteifen metallischen Hohlprofil (11) gehaltert und umschlossen ist; daß die Gleitelemente (17) an eng beabstandeten Stellen innerhalb des Hohlprofils vorgesehen sind und zwischen sich eine im wesentlichen kontinuierliche, insbesondere gekrümmte Lagerfläche definieren, an die sich das Gurtband (14a) im Betrieb eng anpaßt, so daß die auf dem Band (14a) geförderte Last maximiert wird, während eine lokale Belastung der Lagerfläche vermieden wird.

2. Muldengurtförderer nach Anspruch 1, ferner dadurch gekennzeichnet, daß am Austragende des Förderers (10) Staubabscheidemittel (21) vorgesehen sind.

3. Muldengurtförderer nach Anspruch 1, ferner dadurch gekennzeichnet, daß in dem formsteifen metallischen Hohlprofil (11) eine Einstiegöffnung (19) vorgesehen ist.

4. Muldengurtförderer nach Anspruch 1, ferner dadurch gekennzeichnet, daß in dem formsteifen metallischen Hohlprofil (11) ein Inspektionsfenster vorgesehen ist.

5. Muldengurtförderer nach einem der vorhergehenden Ansprüche, ferner dadurch gekennzeichnet, daß der abriebfeste reibungsarme Werkstoff für die Gleitelemente (17) ein Hochdruckpolyethylen mit extrem hohem Molekulargewicht ist.

6. Muldengurtfördrerer nach einem der vorhergehenden Ansprüche, ferner dadurch gekennzeichnet, daß ein Inspektionslaufgang (20) an der Außenseite des formsteifen metallischen Hohlprofils (11) angeordnet ist.

## Revendications

1. Convoyeur (10) à courroie en auge destiné en premier lieu au transport de matériaux en morceaux comme le roc, le charbon et le minerai, et comprenant une courroie convoyeuse sans fin (14) présentant un brin porteur (14a) et un brin de retour (14b), des moyens moteurs d'entraînement (15), et des moyens de support pour le brin porteur de la courroie comportant une pluralité de glissières allongées (17) résistantes à l'abrasion et ayant un faible coefficient de frottement que s'étendent dans le sens de la courroie, et des moyens de support (16) pour le brin de retour de la courroie, caractérisé en ce que le brin porteur (14a) est supporté en enfermé par un tube métallique structurel rigide (11), les glissières (17) sont disposées en des positions rapprochées dans le tube et définissent entre elles une surface d'appui arquée partiellement circulaire sensiblement continue qu'épouse la courroie (14a) en cours d'utilisation, permettant ainsi à la charge (18) portée par la courroie (14a) d'être maximalisée tout en évitant des chargements localisés sur la surface d'appui.

2. Convoyeur à courroie en auge selon la revendication 1, caractérisé en outre par le fait que des moyens de contrôle de la poussière (21) sont prévus à l'extrémité de décharge du convoyeur (10).

3. Convoyeur à courroie en auge selon la revendication 1, caractérisé en outre par le fait qu'une ouverture d'accès (19) est ménagée dans le tube métallique structurel rigide (11).

4. Convoyeur à courroie en auge selon la revendication 1, caractérisé en outre par le fait qu'un regard d'inspection est ménagé dans le tube métallique structurel rigide (11).

5. Convoyeur à courroie en auge selon l'une quelconque des revendications précédentes, caractérisé en outre par le fait que le matériau résistant à l'abrasion et de faible coefficient de frottement utilisé pour les glissières (17) et un polyéthylène de haute densité à poids moléculaire ultra élevé.

6. Convoyeur à courroie en auge selon l'une quelconque des revendications précédentes, caractérisé en outre par le fait qu'un trottoir d'inspection (20) est monté extérieurement sur le tube métallique structurel rigide (11).

FIG 1

FIG. 2